# FASCICULE DE BREVET EUROPEEN

(11) **EP 0 649 386 B1**
(45) Date de publication et mention de la délivrance du brevet: **10.06.1998**
(21) Numéro de dépôt: 94913154.4
(22) Date de dépôt: 11.04.1994
(51) Int. Cl.: C01B 17/765

(54) **PROCEDE DE PRODUCTION D'ACIDE SULFURIQUE A PARTIR DE DIOXYDE DE SOUFRE**
VERFAHREN ZUR HERSTELLUNG VON SCHWEFELSAEURE AUS SCHWEFELDIOXID
PROCESS FOR THE PRODUCTION OF SULPHURIC ACID FROM SULPHUR DIOXIDE

(30) Priorité: 15.04.1993 FR 9304426
(43) Date de publication de la demande: 26.04.1995
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: ARPENTINIER, Philippe, F-78000 Versailles (FR)
(74) Mandataire: Vesin, Jacques
(86) Numéro de dépôt international: FR9400400
(87) Numéro de publication internationale: WO9424045

(56) Documents cités:
- EP-A- 0 218 411
- DE-A- 2 647 772
- FR-A- 2 386 479

## Description

La présente invention est relative à un procédé de production d'acide sulfurique à partir de dioxyde de soufre.

D'une manière générale, l'acide sulfurique est produit en deux étapes successives :
- oxydation du dioxyde de soufre en trioxyde de soufre ;
- absorption du trioxyde de soufre par de l'acide sulfurique dilué pour former de l'acide sulfurique concentré.

La réaction d'oxydation est réalisée à partir d'un mélange de gaz dont la composition en oxygène et dioxyde de soufre varie suivant son origine : combustion du soufre, grillage de sulfures, décomposition de sulfates métalliques, etc.

La mise en oeuvre de la réaction industrielle est effectuée dans un réacteur, appelé encore convertisseur, récipient cylindrique en fonte ou en acier calorifugé dans lequel sont disposés des plateaux ou des tubes contenant le catalyseur.

On utilise différents types de convertisseurs :

### a) les convertisseurs avec échangeurs thermiques externes

Ce sont de simples caisses contenant le catalyseur déposé en lit sur des plateaux communiquant avec des échangeurs à faisceau tubulaire situés hors du réacteur. L'étage catalytique peut être considéré comme adiabatique.

Le gaz d'alimentation est introduit dans le premier lit de catalyseur. En sortie du lit, le gaz chaud est envoyé vers un échangeur extérieur puis retourne, une fois refroidi, vers le second lit. Un tel convertisseur est généralement composé de 4 à 5 lits catalytiques. Les échangeurs sont des échangeurs gaz-gaz fonctionnant à contre-courant, le gaz refroidissant étant généralement de l'air ou l'alimentation du premier étage qui doit être préchauffé.

### b) les convertisseurs à échangeurs thermiques internes :

Dans ce cas, les caisses sont constituées de tubes ou de lits de catalyseur refroidis à l'intérieur par le gaz d'alimentation au moyen de doubles enveloppes, de tubes plongeant dans la masse catalytique ou de tubes disposés dans le circuit gazeux. Dans ces appareils, l'élimination de la chaleur de réaction est réalisée sur place, de sorte que l'élévation de température est limitée. Le fluide réfrigérant est généralement de l'air ou des gaz d'alimentation, le système d'échange de chaleur pouvant être un échangeur à faisceau tubulaire ou un échangeur à ailettes.

### c) les convertisseurs à échangeurs thermiques mixtes :

Ces caisses de contact sont les plus modernes ; elles comportent généralement trois à cinq lits de catalyseurs.

En principe, les échangeurs externes sont situés dans les étages supérieurs (entre le 1er et le 2ème, entre le 2ème et le 3ème), tandis que le refroidissement des étages inférieurs est assuré par des injections d'air froid de dilution.

Quel que soit le type de convertisseur employé, le catalyseur est généralement composé d'oxyde de vanadium (V₂O₅) déposé sur un support en silice.

Il est à noter qu'un tel catalyseur ne supporte pas des températures supérieures à 620°C.

Par ailleurs, il existe une température minimale d'action, à partir de laquelle le catalyseur commence à être actif, approximativement 400°C. Ce seuil d'activité correspond à la température pour laquelle un nombre appréciable de molécules réagissantes possèdent une énergie suffisante pour provoquer la formation de complexes chimisorbés.

Les principaux paramètres opératoires d'une unité de production d'acide sulfurique sont les suivants :
- **La pression :**
   A température constante, la conversion croît avec la pression comme le montre l'équation stoechiométrique (diminution du nombre de moles) ; cependant, l'emploi de pressions élevées ne se justifie pas en raison des impératifs technologiques des appareillages sous pression.
- **La température :**
   La réaction d'oxydation du dioxyde de soufre en trioxyde de soufre étant exothermique, l'équilibre thermodynamique sera déplacé vers la formation du trioxyde de soufre par une diminution de température. Par contre, un certain niveau de température sera nécessaire pour obtenir une vitesse de réaction suffisante sous l'effet du catalyseur. C'est pourquoi il est nécessaire d'envisager un compromis entre les effets antagonistes de la température sur la thermodynamique et la cinétique. Pratiquement, on opère à des températures de l'ordre de 450°C pour lesquelles la vitesse de réaction est suffisante et le taux de conversion acceptable.
- **La composition du gaz d'alimentation (SO**_{**2**}**, N**_{**2**}**, O**_{**2**}**) :**
   Pour une température donnée, un excès d'oxygène a une influence favorable sur le taux de conversion. Il faut considérer que dans un mélange SO₂-O₂-N₂, à azote constant, l'augmentation de la teneur en SO₂ se traduit par une diminution relative de la teneur en oxygène ayant pour résultat de diminuer le taux de conversion. Inversement, une faible concentration de SO₂ dans le gaz et l'augmentation concomittante de la teneur en oxygène améliorera le taux de conversion. Il est donc indéniable qu'il existe un rapport molaire optimal O₂/SO₂ ; il est de l'ordre de 1,5. De plus, il est à noter que l'influence de la température n'est cependant pas uniforme selon qu'on utilise des gaz à faible ou forte teneur en SO₂.
- **La vitesse massique totale du gaz :**
   Les pertes de charge constituent une limitation aux grands débits. Usuellement, la vitesse massique totale est de l'ordre de 1500 à 2500 kg/m³/h).
   En aval du convertisseur, une colonne d'absorption du trioxyde de soufre à l'acide sulfurique concentré permet de produire de l'acide sulfurique fortement concentré ou des oléums. L'absorption a lieu dans une colonne à garnissage alimentée par l'acide à 98 %. L'acide enrichi produit en bas de la colonne est ramené à 98 % par de l'acide plus faible provenant des tours de séchage des gaz entrants.

Il est à noter que dans des procédés dits à double absorption, une colonne d'absorption intermédiaire située entre le 2ème et le 3ème étage ou entre le 3ème et le 4ème étage, permet d'obtenir un taux de conversion final de l'ordre de 99,7 %. En effet, compte tenu de l'élimination du trioxyde de soufre à l'entrée du groupe d'étages situé en aval de la colonne intermédiaire, l'équilibre est très largement déplacé vers la formation de SO₃.

De nos jours, de nombreux pays imposent des normes de plus en plus strictes au niveau des rejets de SO₂ à l'atmosphère. En conséquence, il est quasiment obligatoire d'utiliser un procédé à double absorption pour la construction de nouvelles unités.

En ce qui concerne les procédés à simple absorption, les producteurs d'acide utilisant une unité pré-existante doivent diminuer la quantité de SO₂ rejetée à l'atmosphère. Pour cela, ils ont plusieurs possibilités :
- **augmenter la conversion de leur unité :**
   . en transformant leur unité en installation à double absorption,
   . ou en utilisant un nouveau catalyseur qui augmente la conversion,
   . ou en dopant l'unité existante à l'oxygène.
- **traiter les gaz de rejet:**
   . par une neutralisation à la chaux,
   . ou par adsorption du SO₂ sur charbon actif.

Ces procédés sont coûteux soit en investissement, soit en frais de fonctionnement. Parmi eux, le dopage à l'oxygène paraît un des plus avantageux.

Dans le document GB-A-1.602.108, il a été proposé d'injecter de l'oxygène dans un convertisseur à quatre étages, alimenté par du gaz provenant de four à soufre. Il est précisé qu'il n'est pas concevable d'injecter de l'oxygène au premier étage : compte tenu du niveau de température mis en oeuvre, l'activité catalytique serait rapidement détériorée.

Il ressort des tableaux de ce document qu'il est préférable d'injecter de l'oxygène au deuxième étage plutôt qu'au troisième, et au troisième plutôt qu'au quatrième, car l'oxygène nécessaire pour un même taux de conversion augmente d'un étage au suivant.

Il ressort de ce document que l'oxygène présente un intérêt certain pour augmenter le taux de conversion final d'une unité à double absorption. Cependant, dans les conditions indiquées, il est peu envisageable de rentabiliser une telle opération. En effet, les quantités d'oxygène injecté varient de 0,12 à 0,32 tonne d'oxygène par tonne d'acide sulfurique pour un gain sur la conversion de 0,4 à 0,5 point seulement, ce qui ne permet pas toujours d'être dans les normes imposées dans la lutte contre la pollution.

La présente invention a pour but de fournir un nouveau procédé, qui permette d'obtenir des taux de conversion permettant de satisfaire aux normes anti-pollution avec des frais d'investissement et fonctionnement réduits dans le cas d'une unité pré-existante sans colonne d'absorption intermédiaire et/ou qui permette des gains substantiels de productivité dans le cas d'une installation plus récente équipée d'une telle colonne.

Pour obtenir ce résultat, l'invention conceme un procédé de production d'acide sulfurique à partir du dioxyde de soufre comportant les opérations d'oxydation de dioxyde de soufre en trioxyde de soufre en présence d'air, et d'absorption du trioxyde de soufre par de l'acide sulfurique dilué pour former de l'acide sulfurique concentré, l'oxydation du dioxyde de soufre étant faite dans un convertisseur comportant au moins trois étages dans chacun desquels les gaz à faire réagir sont mis en contact avec un catalyseur, ces gaz traversant successivement un premier, un second et un troisième étages et éventuellement d'autres étages, en étant refroidis, dans des échangeurs ou par injection d'un gaz froid, entre les étages successifs, et de l'oxygène étant introduit dans les gaz à faire réagir après leur passage dans le premier étage et/ou un des étages suivants, ce procédé ayant pour particularité que, simultanément à chaque introduction d'oxygène, on diminue de 3 à 50°C, avantageusement de 5 à 50°C, plus avantageusement encore de 10 à 25°C environ, la température d'introduction des gaz dans au moins un des étages qui suivent cette introduction, par rapport à la température à ± 2°C, mise en oeuvre dans chaque étage, en l'absence d'introduction d'oxygène.

Comme on l'a indiqué plus haut, il est connu que l'admission d'oxygène, seule, a un effet favorable limité sur le taux de conversion, alors qu'une baisse de la température a des effets antagonistes d'amélioration de la conversion et de réduction de la vitesse de réaction, si bien qu'un compromis doit être établi. L'invention résulte de la découverte que ce compromis était déplacé dans un sens favorable par la présence d'oxygène.

Dans le cadre de la présente invention, on entend par l'expression "température dans les conditions normales", la température à ±2°C, mise en oeuvre dans chaque étage en l'absence d'oxygène, ladite température permettant d'optimiser au mieux le fonctionnement (notamment le rendement) des catalyseurs dans l'étage concerné.

Bien entendu, cette température doit être adaptée, de manière classique, en particulier en fonction du convertisseur et du catalyseur mis en oeuvre.

Par "oxygène", on entend aussi bien de l'oxygène pratiquement pur, obtenu par voie cryogénique, que l'oxygène moins pur, obtenu classiquement à l'aide de membranes ou d'un dispositif PSA, ou de l'air enrichi en oxygène.

De préférence, la diminution de température est telle que, à la sortie de l'étage qui suit immédiatement, la température est sensiblement égale ou inférieure à la température à ± 2°C, mise en oeuvre dans chaque étage, en l'absence d'introduction d'oxygène.

De cette façon, la température dans tout l'étage, de l'entrée à la sortie, est inférieure à ce qu'elle serait en l'absence d'introduction d'oxygène.

Avantageusement, on introduit de l'oxygène dans les gaz avant leur entrée dans chacun des étages qui suivent le premier.

Dans ce cas, il est préférable de prévoir qu'on introduit des quantités décroissantes d'oxygène avant l'entrée des gaz dans les étages successifs.

En effet, c'est au niveau du deuxième étage que l'efficacité de l'oxygène se montre la plus grande et elle diminue progressivement dans les étages suivants.

### Exemple 1 :

Dans une unité traitant environ 43 000 m³/h (ce qui correspond à 450000 tonnes par an) d'un gaz de composition moléculaire moyenne suivante :
N₂ : 81,2%; O₂ : 8,6%; SO₂ : 10,2%,
et où le convertisseur comprend quatre étages de catalyseur, avec trois échangeurs intercalaires, on a procédé aux essais suivants :
- A :: procédé classique : unité dans les conditions classiques de fonctionnement.
- B :: injection de 1600 Nm³/h d'oxygène au 2ème étage dans les conditions classiques de fonctionnement.
- C :: injection de 1800 Nm³/h d'oxygène au 3ème étage dans les conditions classiques de fonctionnement.
- D :: injection de 2000 Nm³/h d'oxygène au 4ème étage dans les conditions classiques de fonctionnement.
- E :: comme B, mais avec diminution des températures d'alimentation des 2ème, 3ème ou 4ème étages.
- F :: comme C, mais avec diminution des températures d'alimentation des 2ème, 3ème ou 4ème étages.
- G :: comme D, mais avec diminution des températures d'alimentation des 2ème, 3ème ou 4ème étages.
- H :: injection d'oxygène aux 2ème, 3ème et 4ème étages de respectivement 1500, 900 et 600 Nm³/h avec diminution des températures d'alimentation de ces étages.

Les essais A à D sont conformes à la technique connue, alors que les essais E à H sont conformes à l'invention.

Les résultats sont rassemblés dans le tableau suivant :

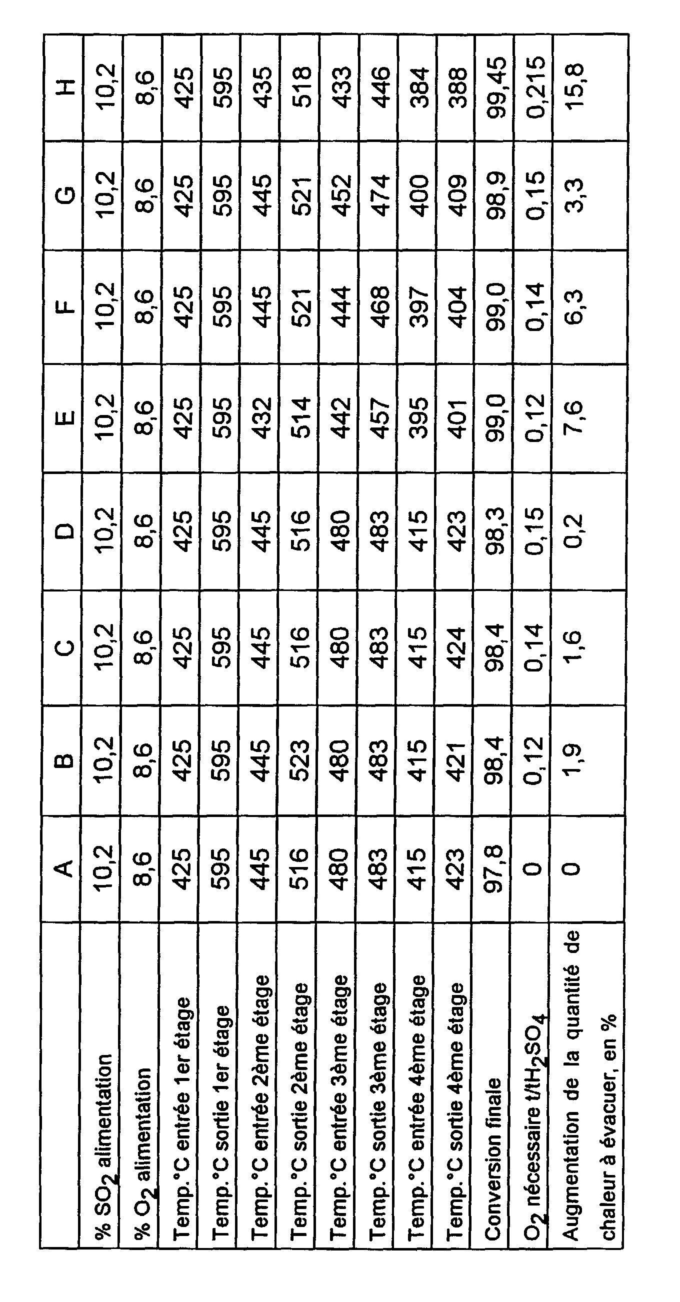

### Exemple 2:

Dans une unité identique à la précédente, et traitant les mêmes gaz au même débit, excepté le fait que son convertisseur est équipé d'une colonne d'absorption entre le deuxième et le troisième étage, on a procédé aux essais suivants :
- I :: traitement classique
- J :: comme I, mais avec débit d'alimention X 1,1
- K :: comme I, mais avec introduction de 200 Nm³/h d'oxygène au 2ème étage, et températures réduites de 10°C à l'entrée des trois étages.
- L :: comme I, mais avec débit d'alimentation X 1,2
- M :: comme L, mais avec une introduction de 300 Nm³/h d'oxygène au 2ème étage, et températures réduites de 10°C à l'entrée des trois étages.

La composition des gaz à traiter était la même que pour l'exemple 1.

Les essais ont donné les résultats exposés dans le tableau ci-après :

| | I | J | K | L | M |
|---|---|---|---|---|---|
| Taux de conversion final | 99,5 | 99,1 | 99,6 | 99,2 | 99,5 |
| O₂ nécessaire t/tH₂SO₄ | 0 | 0 | 0,013 | 0 | 0,018 |
| Augmentation de la quantité de chaleur à évacuer, en % | 0 | 7,5 | 17 | 14 | 16 |

Ces exemples ont montré que, dans le cas d'une unité sans colonne d'absorption intermédiaire, on obtient une amélioration du taux de conversion, qui peut correspondre à une diminution de moitié au moins de la quantité de dioxyde de soufre présente en sortie du convertisseur et que, dans le cas d'une unité avec colonne d'absorption intermédiaire, le débit peut être augmenté jusqu'à 20 % sans abaissement du taux de conversion.

Une telle augmentation de débit peut également être obtenue dans le cas d'une unité sans absorbeur intermédiaire.

## Revendications

1. Procédé de production d'acide sulfurique à partir du dioxyde de soufre comportant les opérations d'oxydation du dioxyde de soufre en trioxyde de soufre en présence d'air, et d'absorption du trioxyde de soufre par de l'acide sulfurique dilué pour former de l'acide sulfurique concentré, l'oxydation du dioxyde de soufre étant faite dans un convertisseur comportant au moins trois étages dans chacun desquels les gaz à faire réagir sont mis en contact avec un catalyseur, ces gaz traversant successivement un premier, un second et un troisième étages et éventuellement d'autres étages, en étant refroidis entre les étages successifs, et de l'oxygène étant introduits dans les gaz à faire réagir après leur passage dans le premier étage et/ou un des étages suivants,
caractérisé en ce que, simultanément à chaque introduction d'oxygène, on diminue de 3 à 50°C la température d'introduction des gaz dans au moins un des étages qui suivent cette introduction, par rapport à la température à ± 2°C, mise en oeuvre dans chaque étage, en l'absence d'introduction d'oxygène.

2. Procédé selon la revendication 1, caractérisé en ce que la diminution de température est telle que, à la sortie de l'étage qui suit immédiatement l'introduction d'oxygène, la température est sensiblement égale ou inférieure à la température à ± 2°C, mise en oeuvre dans chaque étage, en l'absence d'introduction d'oxygène.

3. Procédé selon la revendication 1 ou 2, caractérisé en ce qu'on introduit de l'oxygène dans les gaz avant leur entrée dans chacun des étages qui suivent le premier.

4. Procédé selon la revendication 3, caractérisé en ce qu'on introduit des quantités décroissantes d'oxygène avant l'entrée des gaz dans les étages successifs.

5. Procédé selon l'une des revendications 1 à 4, caractérisé en ce qu'on diminue de 5 à 50°C, de préférence de 10 à 25°C, ladite température d'introduction des gaz.

## Patentansprüche

1. Verfahren zur Herstellung von Schwefelsäure aus Schwefeldioxid, umfassend die Oxidation von Schwefeldioxid zu Schwefeltrioxid in Gegenwart von Luft und die Absorption von Schwefeltrioxid durch verdünnte Schwefelsäure, um konzentrierte Schwefelsäure zu erhalten, wobei die Oxidation des Schwefeldioxids in einem Konverter durchgeführt wird, der mindestens drei Stufen enthält, in denen jeweils die zur Reaktion zu bringenden Gase mit einem Katalysator in Kontakt gebracht werden, diese Gase nacheinander eine erste, eine zweite, eine dritte Stufe und gegebenenfalls weitere Stufen durchströmen und dabei zwischen den aufeinanderfolgenden Stufen gekühlt werden und den zur Reaktion zu bringenden Gasen nach Durchströmen der ersten Stufe und/oder einer der nachfolgenden Stufen Sauerstoff zugegeben wird, **dadurch gekennzeichnet,** daß bei jeder Zugabe von Sauerstoff gleichzeitig die Einleittemperatur der Gase in mindestens einer der dieser Zugabe folgenden Stufen gegenüber der Temperatur, die in jeder Stufe ohne die Zugabe von Sauerstoff eingestellt wird, mit einer Abweichung von ±2°C um 3 bis 50°C erniedrigt wird.

2. Verfahren nach Anspruch 1, dadurch gekennzeichnet, daß die Temperatur so erniedrigt wird, daß am Auslaß der Stufe, die unmittelbar der Sauerstoffzugabe folgt, die Temperatur mit einer Abweichung von ±2°C ungefähr gleich oder kleiner der Temperatur ist, die in jeder Stufe ohne die Zugabe von Sauerstoff eingestellt wird.

3. Verfahren nach Anspruch 1 oder 2, dadurch gekennzeichnet, daß den Gasen Sauerstoff zugegeben wird, bevor sie in jede der auf die erste Stufe folgenden Stufen eintreten.

4. Verfahren nach Anspruch 3, dadurch gekennzeichnet, daß den Gasen, bevor sie in die nachfolgenden Stufen eintreten, abnehmende Mengen Sauerstoff zugegeben werden.

5. Verfahren nach einem der Ansprüche 1 bis 4, dadurch gekennzeichnet, daß die Einleittemperatur der Gase um 5 bis 50°C, vorzugsweise um 10 bis 25°C, erniedrigt wird.

## Claims

1. Process for producing sulphuric acid from sulphur dioxide consisting of the operations of oxidizing sulphur dioxide into sulphur trioxide in the presence of air, and of adsorbing the sulphur trioxide with dilute sulphuric acid to form concentrated sulphuric acid, oxidation of sulphur dioxide being carried out in a converter having at least three stages in each of which the gases to be reacted are put into contact with a catalyst, these gases passing successively through a first, second and third stage and possibly other stages while being cooled between the successive stages, and oxygen being introduced into the gases to be reacted after their passage through the first stage and/or one of the following stages,
characterized in that, simultaneously to each introduction of oxygen, the temperature at which the gases are introduced is reduced by 3 to 50°C in at least one of the stages which follow this introduction, with respect to the temperature ± 2°C employed in each stage, without the introduction of oxygen.

2. Process according to claim 1, characterized in that the temperature reduction is such that, at the outlet from the stage which immediately follows the introduction of oxygen, the temperature is substantially equal to or lower than the temperature ± 2°C, employed in each stage, without the introduction of oxygen.

3. Process according to claim 1 or 2, characterized in that oxygen is introduced into the gases before they enter each of the stages following the first.

4. Process according to claim 3, characterized in that decreasing quantities of oxygen are introduced before the gases enter the successive stages.

5. Process according to one of claims 1 to 4,
characterized in that the said temperature at which the gases are introduced is reduced by 5 to 50°C, preferably 10 to 25°C.
